**Europäisches Patentamt**

**European Patent Office**

**Office européen des brevets**

(19)

(11) Numéro de publication: **0 172 051**
**A1**

(12) ## DEMANDE DE BREVET EUROPEEN

(21) Numéro de dépôt: **85401293.7**

(22) Date de dépôt: **26.06.85**

(51) Int. Cl.⁴: **A 21 C 15/00**
**A 21 C 11/10**

(30) Priorité: **18.07.84 FR 8411395**

(43) Date de publication de la demande:
**19.02.86 Bulletin 86/8**

(84) Etats contractants désignés:
**AT BE CH DE GB IT LI LU NL SE**

(71) Demandeur: **S.A. BISCUITS DUBOIS**
**Avenue de la Prospective, B.P. 1015**
**F-18025 Bourges Cédex(FR)**

(72) Inventeur: **Pauron, Jacques**
**105, Route St Michel**
**F-18000 Bourges(FR)**

(74) Mandataire: **Morash, Daniel**
**17, Avenue La Bruyère**
**F-78160 Marly-le-Roi(FR)**

(54) **Procédé et installation pour la fabrication d'une pâtisserie et appareil utilisé.**

(57) Installation de fabrication, à partir d'un corps tubulaire en pâte, d'une pâtisserie creuse en forme de berlingot ou de gaufrette-étui, dont au moins la surface intérieure peut être nappée avec un produit approprié tel que le chocolat et/ou rempli à l'intérieur d'une substance crémeuse, une confiture ou analogue, remarquable en ce que des premiers moyens $(1_1)$ sont prévus pour faire avancer ledit corps (C) à une vitesse linéaire prédéterminée réglable ainsi que, facultative-ment, des deuxièmes moyens $(1_2)$ pour imprimer audit corps une vitesse de rotation prédéterminée réglable, que lesdits moyens $(1_1, 1_2)$ sont reliés à au moins un capteur-transmetteur $(2_1, 2_2)$ desdites vitesses linéaire et de rotation, les valeurs ainsi captées étant transmises à une unité de calcul (3) analogique qui est en liaison avec au moins un variateur de vitesse $(4_1, 4_2)$ qui commande une première génératrice $(5_1)$ tachymétrique permettant de contrôler la vitesse de rotation d'un premier moteur $(6_1)$ qui commande le dispositif d'avancement linéaire dudit corps (C) logé dans un appareil (A) et, facultativement, une deuxième généra-trice tachymétrique $(4_2)$ permettant de contrôler la vitesse de rotation d'un deuxième moteur $(6_2)$ qui commande le dispositif de rotation dudit corps (C) également logé dans l'appareil (A).

EP 0 172 051 A1

./...

FIG.2

PROCEDE ET INSTALLATION POUR LA FABRICATION
D'UNE PATISSERIE ET APPAREIL UTILISE

----------------------------------------

La présente invention concerne un procédé et une installation pour la fabrication d'une pâtisserie en forme de berlingot ou de gaufrette-étui, par exemple, dont au moins la surface intérieure peut être nappée avec un produit approprié, par exemple le chocolat, et/ou rempli à l'intérieur d'une substance crémeuse, une confiture ou analogue; cette invention concerne également l'appareil essentiel pour la mise en oeuvre dudit procédé et faisant partie de ladite installation, ainsi que les pâtisseries réalisées selon le procédé et dans l'installation conforme à la présente invention.

Les pâtisseries sont, en général, fabriquées à partir de corps tubulaires en pâte.

Dans les procédés et installations connus, ledit corps tubulaire est réalisé par l'enroulement hélicoïdal d'une bande de pâte chaude, avec recouvrement partiel, autour d'un mandrin d'enroulement; le nappage ou le remplissage de la surface intérieure du corps tubulaire ainsi créé est effectué immédiatement après la formation dudit corps tubulaire qui est encore chaud et plastique; le corps tubulaire nappé ou pourvu d'un remplissage est alors tronçonné, avant son durcissement, au moyen d'une cisaille; l'opération de tronçonnage par la cisaille a également pour résultat de rapprocher et de former le corps tubulaire et de créer ainsi des pâtisseries creuses fermées aux deux extrémités. Dans ce procédé connu, il faut que le mouvement de cisaillement s'effectue, aussi rapidement que possible, pour ne pas gêner l'avancement dudit corps tubulaire, pour une cadence de fabrication déterminée. Il y a donc un risque sérieux que les pâtisseries obtenues selon ce procédé n'ont pas des longueurs identiques, ce qui est indispensable pour permettre leur emballage parfait. En outre, l'opération de tronçonnage n'assure pas toujours la parfaite fermeture du corps tubulaire, ce qui est particulièrement gênant pour des pâtisseries pourvues d'un remplissage. En pratique, la cadence de fabrication ne peut pas être accélérée de beaucoup, si l'on veut garantir une bonne qualité et bonne finition de la pâtisserie. Enfin, la pâtisserie fabriquée par tronçonnage est encore chaude et plastique et il faut prévoir un système de refroidissement progressif avant de pouvoir procéder à l'opération d'emballage.

La présente invention a pour but de pallier à ces inconvénients et de créer un procédé et une installation de fabrication de pâtisse-

ries creuses fermées aux deux extrémités qui assure une parfaite régularité des pâtisseries fabriquées à une cadence même très élevée, et qui permet aux pâtisseries ainsi fabriquées d'arriver au poste d'emballage dans un état refroidi et rigide, sans qu'une période et un endroit spécial pour le refroidissement doivent être prévus dans l'installation.

Conformément à l'invention, le procédé de fabrication à partir d'un corps tubulaire en pâte d'une pâtisserie creuse en forme de berlingot ou de gaufrette-étui, par exemple, dont au moins la surface intérieure peut être nappée avec un produit approprié tel que le chocolat, et/ou rempli à l'intérieur d'une substance crémeuse, une confiture ou analogue, est caractérisé en ce qu'il comporte les étapes suivantes :

(i) - le corps tubulaire en pâte sortant en continu chaud et plastique du four est nappé sur sa surface intérieure et/ou extérieure et/ou rempli à l'intérieur d'une substance crémeuse, confiture ou analogue.

(ii)- ledit corps tubulaire ainsi préparé et étant toujours chaud et plastique subit un premier refroidissement facultatif.

(iii)-ledit corps tubulaire est divisé en berlingots ou gaufrettes-étui ayant une longueur pouvant être prédéterminée, par pincement entre deux organes opposés; au moins une paire desdits organes est disposée de façon à assurer, en même temps que le pincement, le transport à une vitesse d'avancement contrôlée dudit corps tubulaire ainsi divisé, cette vitesse d'avancement étant synchronisée avec la vitesse de sortie dudit corps du four ; un deuxième refroidissement dudit corps s'effectuant lors de cette étape; le pincement étant continu de façon progressive lorsque plusieurs paires desdits organes sont disposées successivement les unes après les autres.

(iv)- ledit corps tubulaire divisé en berlingots ou gaufrettes-étui est transféré dans un dispositif de guidage menant vers l'emballage; ledit corps subit lors du passage dans ce guide un troisième refroidissement facultatif; les berlingots en gaufrettes-étui se détachent sans l'intervention d'un dispositif de séparation l'un de l'autre, lors du passage dans ledit dispositif de guidage ou à la sortie dudit dispositif.

(v) - lesdits berlingots ou gaufrettes-étui détachés les uns des autres sont acheminés vers l'emballage.

Ledit premier refroidissement facultatif s'effectue lors du passage dudit corps tubulaire dans un guide menant vers l'appareil qui assure la division dudit corps en berlingots ou gaufrettes-étui par pincement.

Au moins l'un des trois refroidissements est effectué par un apport de froid.

Ledit corps tubulaire étant réalisé de façon connue en soi

par l'enroulement hélicoïdal ou continu d'une bande de pâte se trouvant à l'état chaud et plastique, avec recouvrement partiel, et sortant du four avec une vitesse d'avancement linéaire prédéterminée tout en tournant autour de son axe longitudinal avec une vitesse de rotation également prédéterminée, lesdits organes de coincement tournent en même temps que ledit corps divisé en berlingots ou gaufrettes-étui à une vitesse de rotation synchronisée avec la vitesse de rotation dudit corps à sa sortie du four.

Le degré de refroidissement peut être accéléré ou retardé en fonction de la longueur et/ou de l'inclinaison desdits guides.

L'invention concerne également une installation de fabrication, à partir d'un corps tubulaire ou pâte, d'une pâtisserie creuse en forme de berlingot ou de gaufrette-étui, dont au moins la surface intérieure peut être nappée avec un produit approprié tel que le chocolat et/ou rempli à l'intérieur d'une substance crémeuse, une confiture ou analogue caractérisée en ce que des premiers moyens sont prévus pour faire avancer ledit corps à une vitesse linéaire prédéterminée réglable ainsi que, facultativement, des deuxièmes moyens pour imprimer audit corps une vitesse de rotation prédéterminée réglable, que lesdits moyens sont reliés à au moins un capteur-transmetteur desdites vitesses linéaire et de rotation, les valeurs ainsi captées étant transmises à une unité de calcul analogique qui est en liaison avec au moins un variateur de vitesse qui commande une première génératrice tachymétrique permettant de contrôler la vitesse de rotation d'un premier moteur qui commande le dispositif d'avancement linéaire dudit corps logé dans un appareil et, facultativement, une deuxième génératrice tachymétrique permettant de contrôler la vitesse de rotation d'un deuxième moteur qui commande le dispositif de rotation dudit corps également logé dans l'appareil.

Les variateurs de vitesse peuvent être commandés manuellement.

Les variateurs de vitesse peuvent être commandés automatiquement en fonction d'un programme de fabrication prédéterminé.

Ledit appareil comprend une partie avant qui loge au moins un premier dispositif de commande pour la division du corps tubulaire en pâte en berlingots ou analogues et pour l'avancement contrôlé dudit corps tubulaire divisé, et la conduite de sortie dudit corps divisé vers ledit deuxième guide, une partie arrière comprenant une ouverture d'alimentation dudit corps tubulaire à partir dudit four via ledit premier guide facultatif, ainsi qu'une partie intermédiaire montée et maintenue fixe entre lesdites parties avant et arrière qui loge dans une cassette le système de division dudit corps tubulaire en berlingots ou analogues, un deuxième dispositif de commande pouvant être prévu dans ladite partie avant pour effectuer la rotation de l'ensemble de l'appareil.

L'invention comprend, en outre, l'appareil pour la fabrication d'une pâtisserie creuse tel que des berlingots et analogues à partir d'un corps tubulaire en pâte, pouvant faire partie d'une installation telle que décrite ci-dessus, caractérisé en ce que ledit premier dispositif de commande comprend un pignon cranté commandé directement ou indirectement par ledit premier moteur; ce pignon est monté fixe sur l'extrémité avant d'un manchon portant à son autre extrémité un pignon hélicoïdal, ledit manchon tournant fou autour du moyeu avant dans lequel se trouve ladite conduite; le pignon hélicoïdal entraîne par l'intermédiaire d'un engrenage les pignons montés respectivement sur les axes, chacun desdits axes portant à l'autre de son extrémité, à l'intérieur de ladite cassette entre les flasques un pignon cranté monté à l'extrémité avant de la cassette; chacun des pignons crantés entraîne sur toute la longueur de la cassette une courroie fermée qui tourne folle à l'autre extrémité de ladite cassette avec un pignon ; des premiers moyens étant prévus sur la courroie pour pincer ledit corps tubulaire à des distances prédéterminées, des deuxièmes moyens étant prévus pour la parfaite régularité d'application desdits premiers moyens sur ledit corps tubulaire et des troisièmes moyens pour ajuster la distance desdits deuxièmes moyens par rapport à l'axe longitudinal x - x de l'appareil et donc par rapport audit corps tubulaire.

Lesdites courroies sont réalisées sous forme de chenillars.

Lesdits premiers moyens sont réalisés sous forme de dents pouvant faire partie intégrale du chenillar, lesdites dents étant dirigées vers l'extérieur sur chaque chenillar de façon à ce que la tête de chaque dent du chenillar soit disposée en face de la tête de chaque dent de l'autre chenillar.

Lesdits deuxièmes moyens sont réalisés de façon à ce que chaque chenillar comporte sur sa face intérieure des dents sur lesquelles appuie un rail ayant sensiblement la même largeur que le chenillar, lesdits rails pouvant être déplacés verticalement par rapport à l'axe longitudinal x - x de l'appareil.

Lesdits troisièmes moyens comprennent au moins un étrier coagissant avec un rail pour le déplacer verticalement par rapport à l'axe longitudinal x - x de l'appareil de façon à appuyer plus ou moins fort sur la face interne inférieure de chaque chenillar afin de modifier la distance entre les dents, ledit déplacement étant commandé par un excentrique disposé

entre ledit(s) étrier(s) et ledit rail, des moyens d'immobilisation de l'étrier (des étriers) étant prévus pour le positionnement désiré des rails.

Les moyens d'immobilisation sont des écrous des étriers.

Lesdits deuxièmes moyens mentionnés ci-dessus comportent un pignon cranté claveté sur l'extrémité avant du moyeu compris dans la partie susmentionnée qui est rendue solidaire de la partie intermédiaire comprenant la cassette et de la partie comprenant le moyeu arrière au moyen de joues, ledit pignon cranté étant commandé en rotation par ledit moteur de façon à ce que l'ensemble de l'appareil tourne en même temps que ledit corps tubulaire avance et est divisé en berlingots par les dents des chenillars en mouvement.

La section de la conduite de passage est ovale.

L'invention concerne enfin les pâtisseries réalisées selon le procédé et l'installation décrits ci-dessus.

D'autres caractéristiques et avantages ressortiront du texte suivant et des figures y afférentes, donnés à titre d'exemples uniquement, pour un mode de réalisation de l'invention.

La figure 1 montre, de façon schématique, une installation conforme à l'invention.

La figure 2 montre une coupe longitudinale de l'appareil A faisant partie de l'installation montrée dans la figure 1.

La figure 3 est une coupe transversale selon la ligne A - A de la figure 2.

La figure 4 est une coupe transversale selon la ligne B - B de la figure 2.

La figure 5 est une coupe transversale selon la ligne C - C de la figure 2.

La figure 6 est une coupe transversale selon la ligne D - D de la figure 2.

La figure 7 est une coupe transversale selon la ligne E - E de la figure 2.

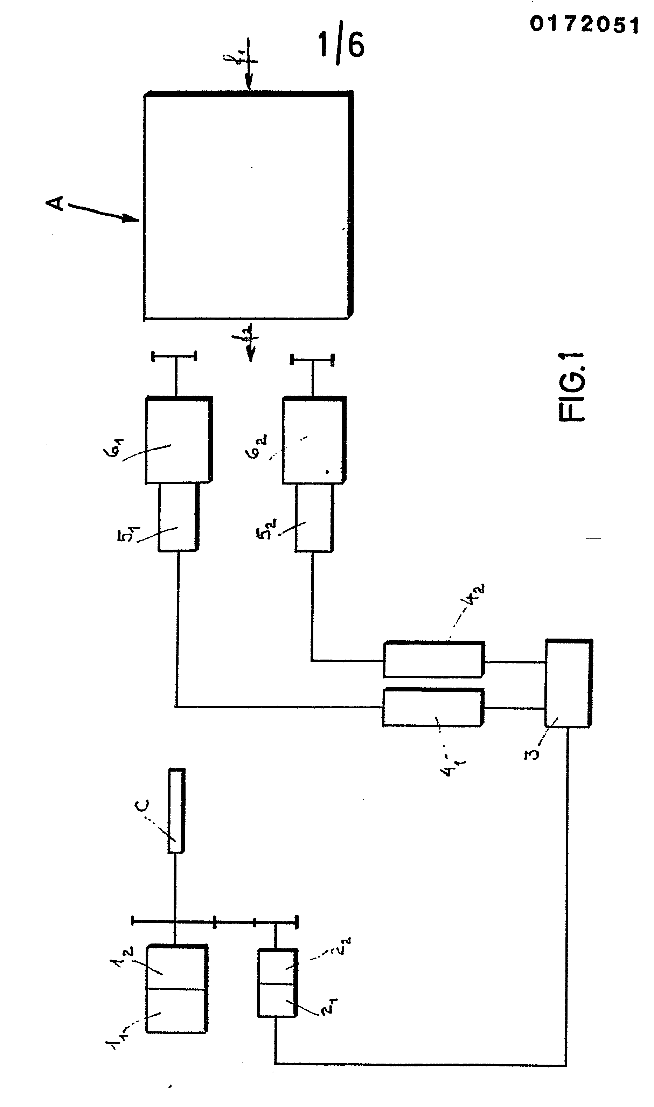

L'installation montrée dans la figure 1 comprend un moyen de propulsion $(1_1)$ pour assurer le transport du corps tubulaire (C) en pâte chaud et plastique à une vitesse linéaire prédéterminée. Ce moyen peut être un moteur rotatif agissant par l'intermédiaire d'une transmission (non montrée sur la figure) sur le dispositif d'avancement linéaire (non montré dans le dessin) dudit corps linéaire. Ce moyen de propulsion (1) est connecté à un capteur-transmetteur $(2_1)$ de la vitesse linéaire d'avancement qui

est relié à une unité de calcul (3) destinée à fonctionner par l'introduction de la carte de calcul analogique sélectionnée. Un variateur de vitesse $(4_1)$ est intercalé entre l'unité de calcul (3) et une génératrice tachymétrique $(5_1)$ qui coopère avec un moteur $(6_1)$ qui commande le déplacement linéaire dudit corps (C) dans l'appareil (A), ledit corps (C) étant introduit en provenance du four, éventuellement par un dispositif de guidage, après un léger refroidissement facultatif, selon la flèche $f_1$ dans l'appareil (A) où il est divisé en berlingots, gaufrettes-étui ou analogues. Le corps (C) quitte cet appareil (A) selon la flèche $f_2$ après avoir subi un refroidissement supplémentaire qui peut être suffisant pour conférer une certaine rigidité aux berlingots qui sont, éventuellement, encore faiblement reliés entre eux aux endroits de pincement dudit corps (C).

Les berlingots relativement chauds, mais ayant déjà acquis une certaine rigidité sont en sortant de l'appareil (A), par exemple, versés sur un dispositif de guidage (non montré dans la figure) où ils subissent un autre refroidissement; ils sont alors totalement rigides et bien fermés aux extrémités. Ils se détachent alors automatiquement les uns des autres et s'acheminent (par exemple par gravité) vers le poste d'emballage où ils sont réceptionnés automatiquement, par exemple, un par un dans l'emballage approprié.

Les dispositifs de guidage peuvent être des rigoles ou gouttières métalliques, par exemple.

Le refroidissement dans au moins l'un des dispositifs de guidage et/ou éventuellement dans l'appareil (A) peut être réalisé par un agent de refroidissement (air refroidi sous pression, gaz inerte froid sous pression, etc...) ou encore simplement par l'air ambiant. Le degré de refroidissement peut, par exemple, être réglé en modifiant l'inclinaison et/ou la longueur desdits dispositifs de guidage et notamment le dispositif de guidage situé à la sortie de l'appareil (A), ce qui permet de déterminer les temps de contact direct avec l'air ambiant dudit corps tubulaire et des berlingots dans lesdits dispositifs de guidage.

Le corps tubulaire peut, de façon connue en soi, être réalisé par l'enroulement hélicoïdal, en continu, d'une bande en pâte chaude et plastique, avec recouvrement partiel.

Un mouvement de rotation est donc imprimé à la bande de pâte (non montrée dans la figure) pour constituer un corps tubulaire (C), par exemple par un moyen $(1_2)$, étant bien entendu que les moyens $(1_1)$ et $(1_2)$ coagissent de façon contrôlée, ou encore sont réalisés sous forme d'un seul ensemble. La vitesse de rotation du corps (C) est mesurée par un cap-

teur-transmetteur $(2_2)$. L'information reçue par les capteurs $(2_1)$ et $(2_2)$ est transmise à l'unité de calcul (3) qui est reliée à des génératrices tachymétriques $(5_1)$ et $(5_2)$ par l'intermédiaire de variateurs de vitesse $(4_1, 4_2)$ ; les génératrices tachymétriques $(5_1)$ , $5_2)$ coopèrent avec les moteurs $(6_1, 6_2)$ pour la commande contrôlée de la vitesse linéaire d'avancement du corps (C) dans l'appareil (A), d'une part, et la vitesse de rotation imprimée à l'appareil (A) entier d'autre part, les deux vitesses étant ainsi nécessairement synchronisées avec la vitesse linéaire d'avancement et la vitesse de rotation du corps tubulaire (C) à la sortie du four. L'appareil (A) contenant les dispositifs de coincement dudit corps tubulaire, ceux-ci tournent, par conséquent, à la vitesse de rotation du corps tubulaire à sa sortie du four. Les variateurs de vitesse $(5_1, 5_2)$ peuvent être réglés manuellement (pour chaque cadence de fabrication désirée) ou encore automatiquement par programmation, par exemple.

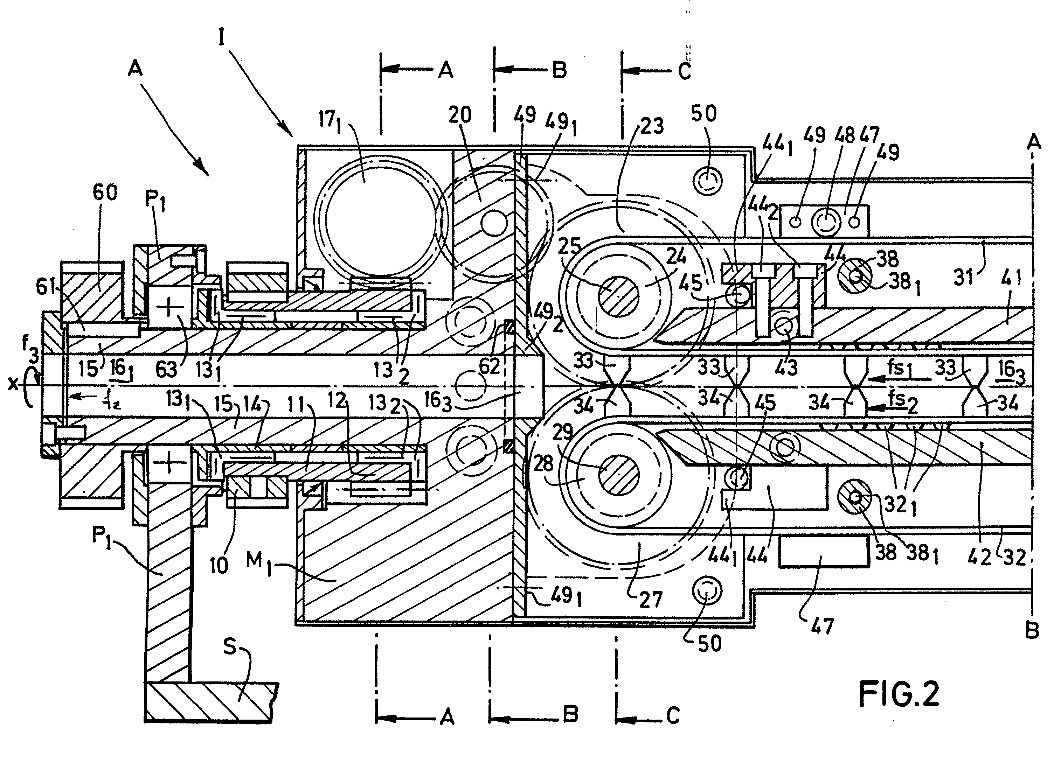

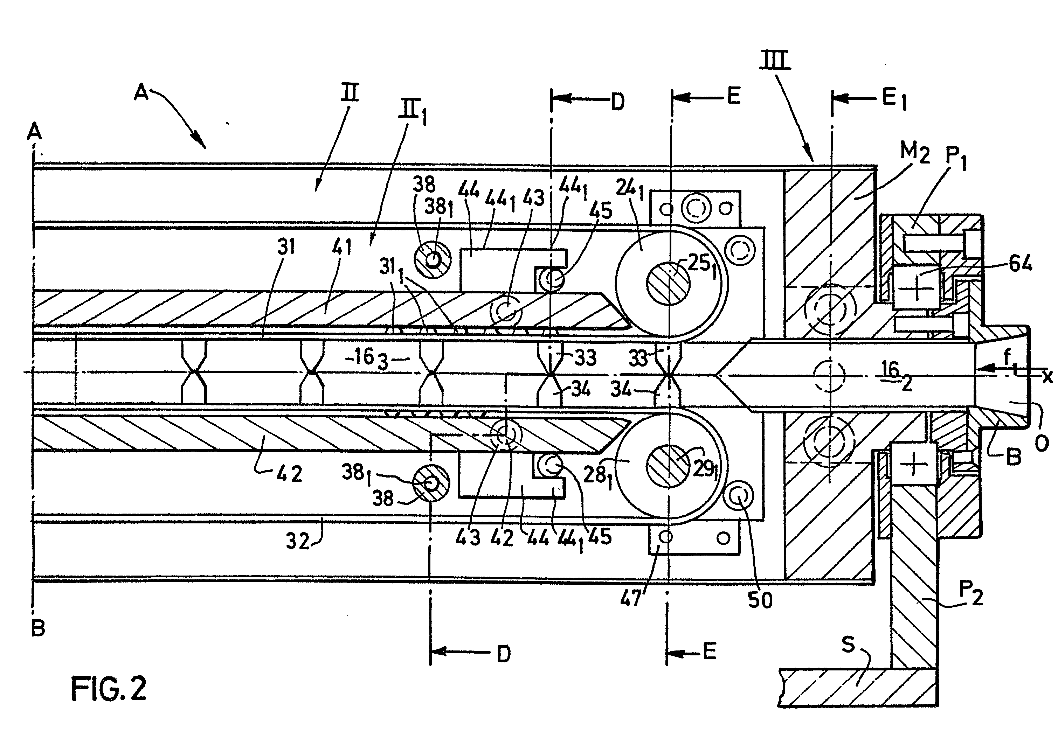

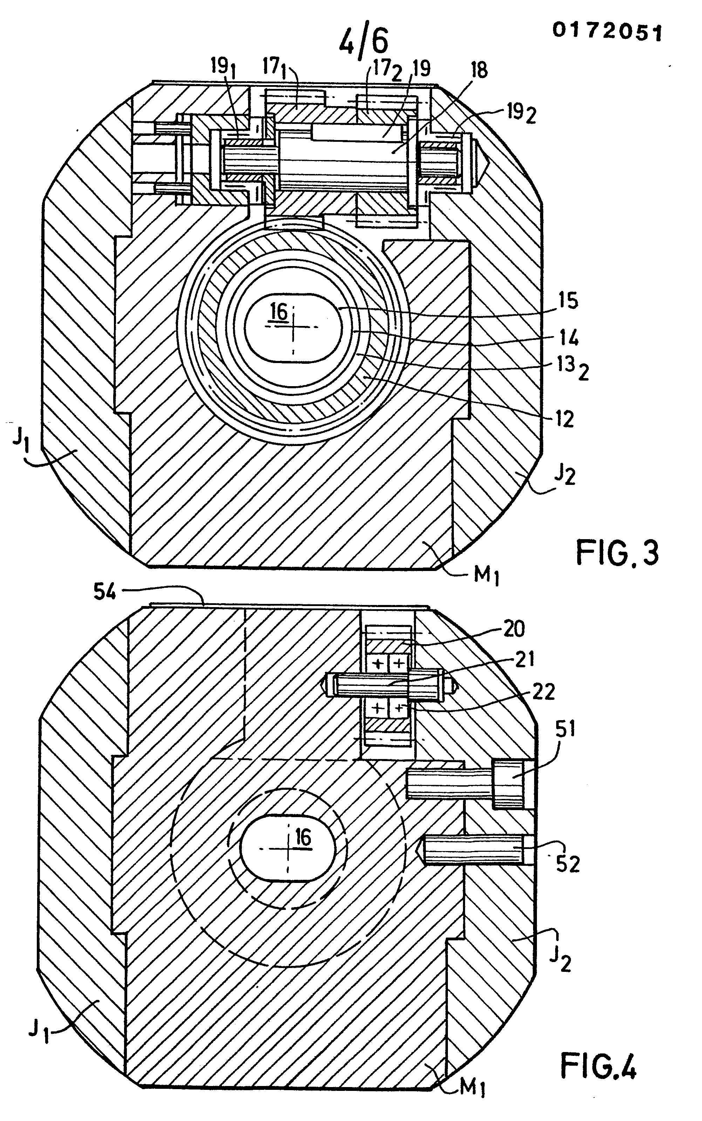

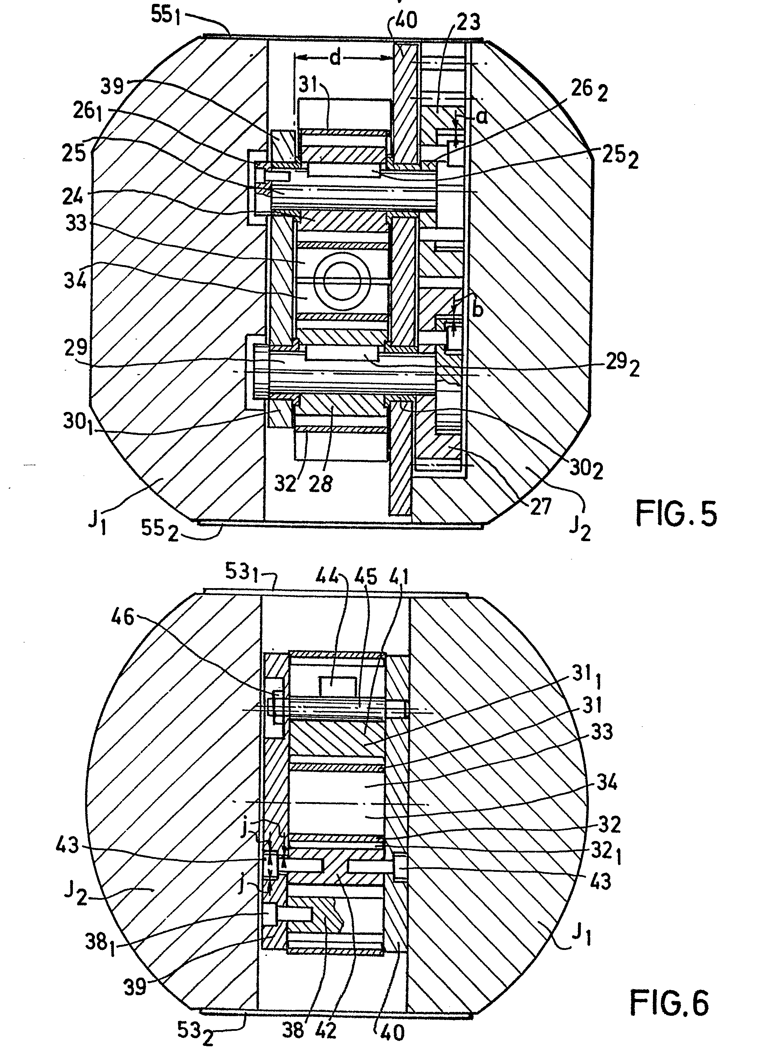

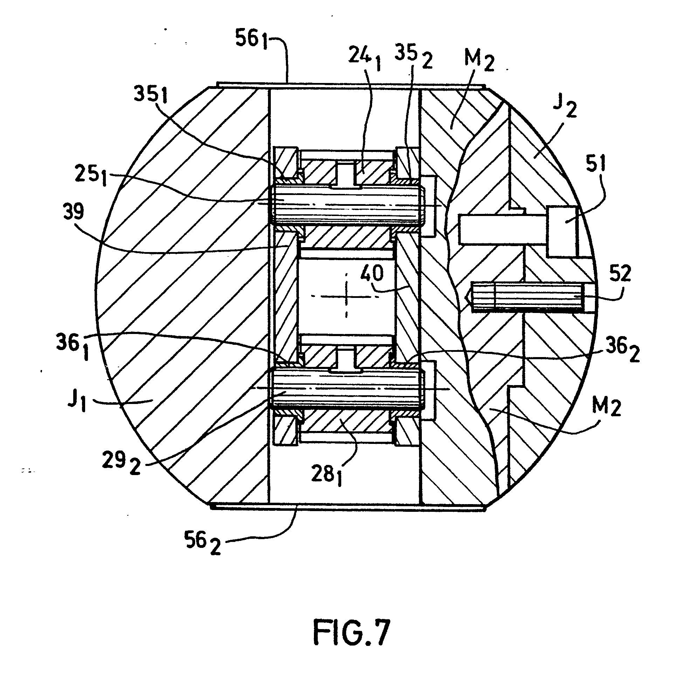

L'appareil (A) est montré dans les figures 2,3,4,5,6 et 7. L'appareil est constitué par trois parties : une partie (I) par laquelle sortent les berlingots ou analogues, cette partie comprenant un moyeu avant $(M_1)$ logeant un palier $(P_1,63)$, la commande de pincement dudit corps tubulaire (C) et, accessoirement, de son entraînement linéaire, ainsi que la commande d'entraînement en rotation de l'appareil (A); une partie (II) médiane qui comprend essentiellement une cassette $(II_1)$ logeant le système de pincement du corps tubulaire (C) pour la création des berlingots ou analogues et, accessoirement, de l'entraînement linéaire dudit corps (C); et une partie arrière (III) par laquelle s'effectue l'admission dudit corps tubulaire en provenance directe ou indirecte du four comprenant un moyeu $(M_2)$ arrière qui loge un palier $(P_2, 64)$. Les trois parties (I,II,III) sont assemblées de façon suivante : le moyeu (I) avant et le moyeu (III) arrière sont reliés entre eux par des joues $(J_1, J_2)$ latérales, dont au moins une est facilement démontable, par exemple la joue $(J_1)$ pour permettre l'accès aux moyens de réglage dudit système de pincement du corps tubulaire (C) entre autres; la partie médiane (II) est montée entre lesdites parties (I) et (II) et maintenue fixe par lesdites joues $(J_1, J_2)$; la cassette $(II_1)$ est positionnée et reliée fixe au moyeu avant $(M_1)$ par une plaque (49) au moyen des vis $(49_1)$, par exemple, un joint torique (62) étant prévu entre ledit moyeu $(M_1)$ et ladite cassette $(II_1)$. Les joues $(J_1, J_2)$ peuvent être positionnées par des pions (par exemple : les pions (52) pour la joue $(J_2)$ à l'arrière) et fixées sur les moyeux par des vis (par exemple : les vis (51) reliant la joue $(J_2$ au moyeu III). Les paliers $(P_1)$ et $(P_2)$ sont reliés entre eux par une semelle (S) qui est montée fixe

sur un support approprié (non montré dans les figures). La partie (III) arrière comprend l'entrée (B) permettant l'alimentation avec ledit corps (C) par l'orifice d'alimentation (O) vers la conduite $(16_2)$ qui est disposée dans le moyeu (III) selon l'axe longitudinal x - x de l'appareil (A).

Le système de pincement dudit corps tubulaire (C) (et accessoirement de son entraînement linéaire) est commandé par le moteur $(6_1)$ (voir figure 1) qui agit directement ou indirectement sur le pignon cranté (10) monté fixe sur l'extrémité avant d'un manchon-axe (11) ; un pignon hélicoïdal (12) est monté fixe sur l'extrémité arrière dudit manchon (11) qui peut tourner librement autour d'une bague (14) solidaire du moyeu $(M_1)$ par l'intermédiaire des roulements-butée $(13_1, 13_2)$. Le moyeu $(M_1)$ est pourvu d'une partie (15) tubulaire comportant selon son axe longitudinal x - x un alésage formant une conduite ovalisée (16) pour la sortie des berlingots de l'appareil (A) vers le poste d'emballage (non montré sur les figures). Ledit pignon (12) entraîne en rotation un pignon hélicoïdal $(17_1)$ monté fixe sur l'extrémité intérieure d'un axe (18) ainsi qu'un pignon $(17_2)$ monté également fixe sur l'extrémité extérieure dudit axe (18) par une clavette (19), par exemple. L'axe (18) tourne dans les roulements - butées $(19_1, 19_2)$ disposés dans le moyeu $(M_1)$ et la joue $(J_2)$ respectivement. Le pignon $(17_2)$ fait tourner le pignon (20) relié fixe à un axe (21) qui tourne fou dans les roulements (22), ledit pignon (20) entraînant en rotation les pignons (23,27) qui commandent les organes de pincement dudit corps. En effet, les pignons (23,27) sont reliés fixes à l'une des extrémités des axes (25) et (29) respectivement. Ces axes sont reliés fixes, par des clavettes $(25_2, 29_2)$ par exemple, sur leurs parties médianes, avec les pignons crantés (24) et (28) disposés à l'intérieur de la cassette $(II_1)$. Les axes (25,29) tournent dans des paliers-butées $(26_1, 26_2)$ et $(30_1, 30_2)$ respectivement. Ces paliers - qui peuvent être en métal fritté, par exemple -, maintiennent lesdits pignons (24,28) de façon à ce qu'ils ne peuvent pas se déplacer latéralement sur leurs axes (25,29).

La cassette $(II_1)$ est essentiellement constituée par deux flasques latéraux (39,40) qui s'étendent sur pratiquement toute la longueur de la partie médiane (II) de l'appareil (A). Ces flasques (39,40) sont maintenus à une distance (d) telle par des entretoises (38) que les pignons crantés (24,28) et les paliers - butées $(26_1, 26_2, 30_1, 30_2)$ soient tenus fermement. Les entretoises (38) peuvent être montées fixes par des vis $(38_1)$, par exemple. L'extrémité avant de la cassette $(II_1)$ comporte une plaque (49) qui est pourvue de perforations pour les pignons, roulements, butées, axes, etc... et est, en outre, pourvue d'un renflement $(49_2)$ dirigé vers l'arrière qui entoure l'orifice central $(16_3)$ ovalisé permettant le passage des berlingots dans la conduite $(16_1)$ susmentionnée. Chacun des pignons crantés $(24,28)$ entraîne un chenillar $(31,32)$ sans fin qui se déplace selon les flèches $(f_{b1}$ , et $f_{b2})$ respectivement des pignons crantés $(24_1, 28_1)$ étant prévus à l'extrémité arrière de la cassette $(II_1)$; ces pignons $(24_1, 28_1)$ sont reliés fixes aux axes $(25_1, 29_1)$ par des clavettes $(25_2, 29_2)$ par exemple, lesdits axes (et pignons) tournant fous dans les paliers-butées $(35_1, 35_2)$ et $(36_1, 36_2)$ respectivement. La cassette $(II_1)$ étant ouverte vers le haut et vers le bas, des couvercles $(53_1, 53_2, 54, 55_1, 55_2, 56_1, 56_2)$ sont prévus, du moins deux couvercles $(53_1, 54, 55_1, 56_1)$ ou $(53_2, 55_2, 56_2)$ pouvant être réalisés sous forme d'une seule pièce. La cassette $(II_1)$ est mise en place dans la partie médiane $(II)$ par les organes $(49)$ de mise en place de la cassette $(II_1)$ au moyen de pions de positionnement de la cassette et des vis de blocage $(48)$.

Les chenillars $(31,32)$ ont une largeur sensiblement égale à la distance $(d)$ entre les faces intérieures des flasques $(39)$ et $(40)$ de la cassette $(II_1)$. Les chenillars $(31,32)$ sont pourvus sur leurs faces intérieures, essentiellement pour leur entraînement par les pignons crantés $(24,28)$, des dents $(31_1, 32_1)$ , et ils portent sur leurs faces extérieures les organes de pincement réalisés par exemple sous forme des dents $(33,34)$. Les dents $(33,34)$ sont espacées à des distances prédéterminées l'une de l'autre sur chaque chenillar afin de pouvoir obtenir, par pincement dudit corps tubulaire $(C)$, une longueur rigoureusement égale de chaque berlingot ou analogue. Pour obtenir à chaque fois la longueur désirée des berlingots, il suffit de changer les chenillars $(31,32)$ pour d'autres ayant des dents $(33,34)$ espacées les unes des autres à des distances égales aux longueurs désirées des berlingots. Les chenillars peuvent être réalisés en tout matériau désiré, par exemple en une matière synthétique appropriée, ou en caoutchouc, métal, etc... Des rails $(41, 42)$ ayant une largeur sensiblement égale à celle du chenillar sont montés entre les flasques $(39)$ et $(40)$ de la cassette $(II_1)$ par des vis $(43)$. Un certain jeu $(j)$ est prévu entre les têtes et la partie des vis $(43)$ et les flasques $(39,40)$ afin de permettre un léger déplacement vertical desdits rails $(41,42)$ par rapport à l'axe longitudinal $x$ - $x$ de l'appareil $(A)$. Le rail $(41)$ s'appuie sur la face intérieure de la partie inférieure du chenillar $(31)$ par l'intermédiaire des dents $(31_1)$, tandis que le rail $(42)$ s'appuie sur la face intérieure de la partie supérieure du chenillar $(32)$ par l'intermédiaire des dents $(32_2)$. Ceci empêche tout mouvement vibratoire ou légèrement ondulatoire des chenillars et le pincement précis du corps tubulaire (C) par les dents (33,34).

Afin de pouvoir tenir compte du diamètre extérieur du corps tubulaire (C), d'une part, et obtenir un réglage optimum du pincement de ce corps (C), d'autre part, lesdits rails (41,42) peuvent être déplacés verticalement par rapport à l'axe x - x du corps (A) au moyen des excentriques (45) agissant sur les becs $(44_1)$ des étriers (44) reliés par des vis $(44_2)$ auxdits rails (41,42). Lorsque la position désirée de chaque ensemble étriers - rail (44,41) et (44, 42) est obtenue par le réglage desdits excentriques (45), ces derniers sont bloqués en cette position par les écrous (46) disposés dans un logement pratiqué dans la face extérieure du flasque (39). On peut, par exemple, prévoir deux étriers (44) pour chacun des rails (41,42), disposés de préférence aux extrémités avant et arrière de chaque rail (41,42). D'autres moyens de maintien des chenillars et/ou de leur positionnement peuvent être imaginés sans pour autant sortir du cadre de l'invention.

L'ensemble de l'appareil (A) tourne autour de l'axe x - x à une vitesse de rotation synchronisée avec celle du corps tubulaire (C) à sa sortie du four. Pour cela, le pignon cranté (60) est entraîné en rotation, directement ou indirectement, par le moteur $(6_2)$, par exemple. Le pignon cranté (60) est relié fixe au moyeu avant $(M_1)$ par une clavette (61). Le moyeu avant $(M_1)$ étant relié fixe au moyeu arrière $(M_2)$ au moyen de joues $(J_1 , J_2)$, la cassette $(II_1)$ étant montée fixe entre lesdits moyeux $(M_1 , M_2)$, l'ensemble de l'appareil (A) est donc mis en rotation par le pignon cranté (60) et peut tourner dans deux roulements (63,64) logés dans les paliers $(P_1 , P_2)$ à l'avant et à l'arrière de l'appareil (A). Comme c'est déjà mentionné plus haut, les paliers $(P_1)$ et $(P_2)$ sont reliés entre eux par une semelle (S) qui est montée sur un support (non montré dans les figures) qui est immobile par rapport au four. Des moyens de refroidissement du corps (C)(non montrés dans les figures) peuvent être prévus.

Le fonctionnement de l'appareil (A) est le suivant :
le corps tubulaire (C) en pâte chaud et plastique arrive à l'entrée (B) de l'appareil (A) avec une vitesse linéaire et une vitesse de rotation selon la flèche $f_3$ prédéterminée en fonction de la cadence de fabrication désirée. L'appareil (A) est mis en rotation par le moteur $(6_2)$ à une vitesse de rotation qui est synchronisée avec la vitesse de rotation dudit corps (C); de même les chenillars sont mis en mouvement à une vitesse qui permet l'avancement des dents (33,34) à une vitesse linéaire en synchronisme avec celle dudit corps tubulaire (C). Le corps (C) entre l'appareil par l'orifice (0) d'alimentation et avance dans la conduite $(16_2)$ jusqu'à la conduite $(16_3)$ dans laquelle les dents (33,34) sont déplacées selon l'axe longitudinal x - x de l'appareil (A). Les têtes des dents (33) du chenillar (31) sont impé-

rativement situées en face des têtes des dents (34) du chenillar (32). La distance entre les têtes des dents (33,34) est déterminée en fonction du diamètre extérieur du corps (C), le réglage de cette distance s'effectuant par les moyens (41,42,44,45) décrits ci-dessus. Le corps tubulaire (C) arrivant dans la conduite (16$_3$) est pincé par la première paire de dents (33,34). Le corps tubulaire (C) nappé et/ou fourré est fermé par l'action des dents (33,34) sans être tronçonné. Le corps tubulaire (C) est élargi à l'endroit de sa fermeture. Le corps (C) continue à avancer dans la conduite (16$_3$). L'endroit fermé dudit corps (C) par pincement entre la première paire de dents (33,34) arrive à la deuxième paire de dents (33,34) qui est distante de ladite première paire d'une longueur égale à celle désirée pour le berlingot. Ladite première paire de dents (33,34) pince alors le corps tubulaire à la distance correspondant à la longueur désirée du berlingot. Le corps tubulaire continue à avancer dans la conduite (16$_3$). Lors de cette avance, les paires de dents (33,34) successives équidistantes les unes des autres maintiennent et, facultativement, accentuent l'effet de coincement dudit corps tubulaire (C), le nombre (n) de berlingots ainsi fabriqués dans ledit conduit (16$_3$) étant égal à (n - 1) paires de dents (33,34). Les berlingots encore faiblement reliés entre eux arrivent sous forme d'un chapelet dans la conduite (16$_1$) ayant une section nécessairement ovale. Le corps tubulaire (C) ayant subi un refroidissement progressif, lors de son passage dans au moins d'une des conduites (16$_1$, 16$_2$, 16$_3$), les berlingots pratiquement tous détachés les uns des autres et dont les parois se sont rigidifiées sortent selon la flèche f$_2$ de la conduite (16$_1$) et sont acheminés via un moyen de guidage éventuellement refroidi vers le poste d'emballage.

Le produit obtenu se distingue par sa régularité de dimensions, par sa forme avantageusement élargie aux extrémités par l'effet de pincement et par leur étanchéité totale, ce qui est indispensable pour des berlingots fourrés, par exemple.

De nombreuses améliorations et modifications peuvent être apportées au procédé, à l'installation, à l'appareil (A) et aux produits sans pour autant sortir du cadre de l'invention.

## R E V E N D·I C A T I O N S

1.) - Procédé de fabrication à partir d'un corps tubulaire en pâte, d'une pâtisserie creuse en forme de berlingot ou de gaufrette-étui, par exemple, dont au moins la surface intérieure peut être nappée avec un produit approprié tel que le chocolat et/ou rempli à l'intérieur d'une substance crémeuse, une confiture ou analogue, caractérisé en ce qu'il comporte les étapes suivantes :

(i) - le corps tubulaire en pâte sortant en continu chaud et plastique du four est nappé sur sa surface intérieure et/ou extérieure et/ou rempli d'une substance crémeuse, confiture ou analogue ;

(ii) -ledit corps tubulaire ainsi préparé et étant toujours chaud et plastique subit un premier refroidissement facultatif ;

(iii)-ledit corps tubulaire est divisé en berlingots ou gaufrettes-étui ayant une longueur pouvant être prédéterminée, par pincement entre deux organes opposés; au moins une paire desdits organes est disposée de façon à assurer, en même temps que le pincement, le transport à une vitesse d'avancement contrôlée dudit corps tubulaire ainsi divisé, cette vitesse d'avancement étant synchronisée avec la vitesse de sortie dudit corps du four; un deuxième refroidissement dudit corps s'effectuant lors de cette étape; le pincement étant continu de façon progressive, lorsque plusieurs paires desdits organes sont disposées successivement les unes après les autres ;

(iv) - ledit corps tubulaire divisé en berlingots ou gaufrettes-étui est transféré dans un dispositif de guidage menant vers l'emballage, ledit corps subit, lors du passage dans ce guide, un troisième refroidissement facultatif; les berlingots ou gaufrettes-étui se détachent sans l'intervention d'un dispositif de séparation l'un de l'autre, lors du passage dans ledit dispositif de guidage ou à la sortie dudit dispositif ;

(v) - lesdits berlingots ou gaufrettes-étui détachés les uns des autres sont acheminés vers l'emballage.

2.) - Procédé selon la revendication 1, caractérisé en ce que ledit premier refroidissement facultatif s'effectue lors du passage dudit corps tubulaire dans un guide menant vers l'appareil qui assure la division dudit corps en berlingots ou gaufrettes-étui par pincement.

3.) - Procédé selon la revendication 1 ou la revendication 2, caractérisé en ce qu'au moins l'un des trois refroidissements est effectué par un apport de froid.

4.) - Procédé selon l'une des revendications précédentes, caractérisé en ce que ledit-corps tubulaire étant réalisé de façon connue en soi par l'enroulement hélicoïdal, en continu, d'une bande de pâte se trouvant à l'état chaud et plastique, avec recouvrement partiel, et sortant du four avec une vitesse d'avancement linéaire prédéterminée tout en tournant autour de son axe longitudinal avec une vitesse de rotation également prédéterminée, lesdits organes de coincement tournent en même temps que ledit corps divisé en berlingots ou gaufrettes-étui à une vitesse de rotation synchronisée avec la vitesse de rotation dudit corps à sa sortie du four.

5.) - Procédé selon l'une des revendications précédentes, caractérisé en ce que le degré de refroidissement peut être accéléré ou retardé en fonction de la longueur et/ou de l'inclinaison desdits guides.

6.) - Installation de fabrication, à partir d'un corps tubulaire en pâte, d'une pâtisserie creuse en forme de berlingot ou de gaufrette-étui, dont au moins la surface intérieure peut être nappée avec un produit approprié tel que le chocolat et/ou rempli à l'intérieur d'une substance crémeuse, une confiture ou analogue pour la mise en oeuvre du procédé selon l'une des revendications 1 à 5, caractérisée en ce que des premiers moyens $(1_1)$ sont prévus pour faire avancer ledit corps (C) à une vitesse linéaire prédéterminée réglable ainsi que, facultativement, des deuxièmes moyens $(1_2)$ pour imprimer audit corps une vitesse de rotation prédéterminée réglable; que lesdits moyens $(1_1, 1_2)$ sont reliés à au moins un capteur-transmetteur $(2_1, 2_2)$ desdites vitesses linéaire et de rotation, les valeurs ainsi captées étant transmises à une unité de calcul (3) analogique qui est en liaison avec au moins un variateur de vitesse $(4_1, 4_2)$ qui commande une première génératrice $(5_1)$ tachymétrique permettant de contrôler la vitesse de rotation d'un premier moteur $(6_1)$ qui commande le dispositif d'avancement linéaire dudit corps (C) logé dans un appareil (A) et, facultativement, une deuxième génératrice tachymétrique $(4_2)$ permettant de contrôler la vitesse de rotation d'un deuxième moteur $(6_2)$ qui commande le dispositif de rotation dudit corps (C) également logé dans l'appareil (A).

7.) - Installation selon la revendication 6, caractérisé en ce que les variateurs de vitesse $(4_1, 4_2)$ sont commandés manuellement.

8.) - Installation selon la revendication 6, caractérisée en ce que les variateurs de vitesse ($4_1$, $4_2$) sont commandés automatiquement en fonction d'un programme de fabrication prédéterminé.

9.) - Installation selon l'une des revendications 6 à 8, caractérisée en ce que ledit appareil (A) comprend une partie (I) avant qui loge au moins un premier dispositif de commande pour la division du corps tubulaire en pâte, en berlingots ou analogues, et pour l'avancement contrôlé dudit corps tubulaire divisé, et la conduite (16) de sortie dudit corps divisé vers ledit deuxième guide, une partie (III) arrière comprenant une ouverture (O) d'alimentation dudit corps tubulaire à partir dudit four via ledit premier guide facultatif, ainsi qu'une partie (II) intermédiaire montée et maintenue fixe entre lesdites parties (I,III) avant et arrière qui loge dans une cassette ($II_1$) le système de division dudit corps tubulaire en berlingots ou analogues, un deuxième dispositif de commande pouvant être prévu dans ladite partie (I) avant pour effectuer la rotation de l'ensemble de l'appareil (A).

10.) - Appareil (A) pour la fabrication d'une pâtisserie creuse tel que des berlingots et analogues à partir d'un corps tubulaire en pâte, pouvant faire partie d'une installation telle que décrite dans les revendications 6 à 9, caractérisé en ce que ledit premier dispositif de commande comprend un pignon cranté (10) commandé, directement ou indirectement, par ledit premier moteur ($6_1$); ce pignon (10) est monté fixe sur l'extrémité avant d'un manchon (11) portant à son autre extrémité un pignon hélicoïdal (12), ledit manchon (11) tournant fou autour du moyeu ($M_1$) avant dans lequel se trouve ladite conduite (16); le pignon hélicoïdal (12) entraîne par l'intermédiaire d'un engrenage ($17_1$, $17_2$, 20) les pignons (23,27) montés respectivement sur les axes (25,29), chacun desdits axes (25,29) portant à l'autre de son extrémité, à l'intérieur de ladite cassette ($II_1$) entre les flasques (39,40) un pignon cranté (24,28) monté à l'extrémité avant de la cassette ($II_1$); chacun des pignons crantés (24, 28) entraîne sur toute la longueur de la cassette ($II_1$) une courroie fermée qui tourne folle à l'autre extrémité de ladite cassette ($II_1$) avec un pignon ($24_1$, $28_1$); des premiers moyens étant prévus sur la courroie pour pincer ledit corps tubulaire à des distances prédéterminées, des deuxièmes moyens étant prévus pour la parfaite régularité d'application desdits premiers moyens sur ledit corps tubulaire et des troisièmes moyens pour ajuster la distance desdits deuxièmes moyens par rapport à l'axe longitudinal x - x de l'appareil (A) et donc par rapport audit corps tubulaire.

11.) - Appareil selon la revendication 10, caractérisé en ce que lesdites courroies sont réalisées sous forme de chenillars (31,32).

12.) - Appareil selon la revendication 10 ou la revendication 11, caractérisé en ce que lesdits premiers moyens sont réalisés sous forme de dents (33,34) pouvant faire partie intégrale du chenillar (31,32), lesdites dents étant dirigées vers l'extérieur sur chaque chenillar (31,32) de façon à ce que la tête de chaque dent (33) du chenillar (31) soit disposée en face de la tête de chaque dent (34) de l'autre chenillar (32).

13.) - Appareil selon l'une des revendications 10 à 12, caractérisé en ce que lesdits deuxièmes moyens sont réalisés de façon à ce que chaque chenillar (31,32) comporte sur sa face intérieure des dents ($31_1$, $32_1$) sur lesquelles appuie un rail (37,38) ayant sensiblement la même largeur que le chenillar (31,32), lesdits rails pouvant être déplacés verticalement par rapport à l'axe longitudinal x - x de l'appareil (A).

14.) - Appareil selon l'une des revendications 10 à 13 , caractérisé en ce que lesdits troisièmes moyens comprennent au moins un étrier ($44_1$ , $44_2$ , $44_3$ , $44_4$) coagissant avec un rail (37,38) pour le déplacer verticalement par rapport à l'axe longitudinal x - x de l'appareil (A) de façon à appuyer plus ou moins fort sur la face interne inférieure de chaque chenillar (31,32) afin de modifier la distance entre les dents (33,34), ledit déplacement étant commandé par un excentrique ($45_1$, $45_2$, $45_3$, $45_4$) disposé entre ledit(s) étrier(s) et ledit rail, des moyens d'immobilisation de l'étrier (des étriers) étant prévus pour le positionnement désiré des rails (37,38).

15.) - Appareil selon la revendication 14, caractérisé en ce que les moyens d'immobilisation sont des écrous ($46_1$, $46_2$, $46_3$, $46_4$) des étriers ($44_1$ , $44_2$ , $44_3$ , $44_4$).

16.) - Appareil selon l'une des revendications 10 à 15, caractérisé en ce que lesdits deuxièmes moyens mentionnés dans la revendication 9 comportent un pignon cranté (60) claveté sur l'extrémité avant (15) du moyeu ($M_1$) compris dans la partie (I) susmentionnée qui est rendue solidaire de la partie intermédiaire (II) comprenant la cassette ($II_1$) et de la partie (III) comprenant le moyeu arrière ($M_2$) au moyen de joues ($J_1$ , $J_2$), ledit pignon cranté (60) étant commandé en rotation par ledit moteur ($6_2$) de façon à ce que l'ensemble de l'appareil (A) tourne en même temps que ledit corps tubulaire (C) avance et est divisé en berlingots par les dents (33,34) des chenillars (31,32) en mouvement.

17.) - Appareil selon l'une des revendications 10 à 16, caractérisé en ce que la section de la conduite de passage (16) est ovale.

18.) - Pâtisseries réalisées selon le procédé précisé dans les revendications

16

**0172051**

1 à 5 dans des installations décrites dans les revendications 6 à 9 au moyen des appareils précisés dans les revendications 10 à 17.

FIG.1

FIG.2

0172051

FIG.2

3/6

0172051

0172051

FIG.3

FIG.4

0172051

FIG.5

FIG.6

0172051

FIG.7

**0172051**
Numéro de la demande

**RAPPORT DE RECHERCHE EUROPEENNE**

Office européen
des brevets

EP  85 40 1293

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-4 283 430  (R.C. DOSTER)<br>* Colonne 6, lignes 40-64; colonne 7, lignes 21-50; colonne 8, lignes 33-40; figures 1-7 *<br><br>--- | 1,2 | A 21 C  15/00<br>A 21 C  11/10 |
| A | FR-A-2 512 328  (F. HAAS et al.)<br>* Page 15, ligne 25 - page 16, ligne 10; figures 1-5 *<br><br>--- | 1 | |
| A | GB-A-1 171 480  (KELLOGG CO.)<br><br>--- | | |
| A | US-A-3 778 209  (P.K. WALLACE et al.)<br><br>--- | | |
| A | FR-A-2 222 015  (F. HAAS)<br><br>--- | | DOMAINES TECHNIQUES RECHERCHES (Int. Cl.4) |
| A | FR-A-2 464 650  (SCERMA MATERIEL)<br><br>--- | | A 21 C |
| A | FR-A-1 460 935  (V. ZUBLENA)<br><br>----- | | |

Le présent rapport de recherche a été établi pour toutes les revendications

| Lieu de la recherche<br>LA HAYE | Date d'achèvement de la recherche<br>22-10-1985 | Examinateur<br>FRANKS N.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82